(19) **Europäisches Patentamt / European Patent Office / Office européen des brevets**

(11) **EP 2 469 222 A1**

(12) **EUROPEAN PATENT APPLICATION**

(43) Date of publication:
27.06.2012 Bulletin 2012/26

(51) Int Cl.:
*G01B 11/02* (2006.01)     *G01B 11/06* (2006.01)
*E21B 21/06* (2006.01)

(21) Application number: 10306505.8

(22) Date of filing: 23.12.2010

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: **Geoservices Equipements**
95700 Roissy en France (FR)

(72) Inventor: **The designation of the inventor has not yet been filed**

(74) Representative: **Gabriel, Franck**
**Etudes et Productions Schlumberger**
**1 Rue Henri Becquerel**
**92142 Clamant Cedex (FR)**

(54) **Method for analyzing at least a cutting emerging from a well, and associated apparatus.**

(57)     The method comprises the following steps:
- disposing at least a cutting (62) on a cuttings support surface (67);
- placing a measuring apparatus (63) over the support surface (67), the measuring apparatus (63) facing the cutting (62), at a distance from the cutting (62);
- measuring a first distance ($d_1$) between a reference plane and the support surface (67) in the vicinity of the cutting (62) along an axis (A-A') transverse to the support surface (67) using the measuring apparatus (63);
- measuring a second distance ($d_2$) between the reference plane and the cutting (62) along the transverse axis (A-A'), using the measuring apparatus (63);
- calculating a representative dimension ($d_{zz}$) of the cutting based on the difference between the first distance ($d_1$) and the second distance ($d_2$).

FIG.2

EP 2 469 222 A1

**Description**

The present invention concerns a method for analyzing at least a cutting emerging from a well.

When drilling an oil well or a well for another effluent (in particular gas, vapor, water), it is known to periodically recover solid samples contained in the drilling mud emerging from the well, in view of their analysis.

The recovered solid samples are visually analyzed to determine geological information on the nature of the formations which are drilled. Additionally, some analysis are carried out to determine the chemical and physical properties of the cuttings, for example the compositional and dimensional properties of the cuttings.

The above-mentioned analyses are carried out either in the vicinity of the well being drilled, for example in a specifically equipped cabin, or in a laboratory dedicated to the study of the cuttings, away from the drilling site.

The correct analysis of the cuttings contributes in determining the location of potential deposits of fluids contained in the formation, in particular by delimiting appropriate geological underground structures.

It is therefore very valuable to provide information on the cuttings as soon as they are recovered from the well by performing on-site analysis.

Considerable progress has been made in the analysis of the cuttings. In particular, very accurate analytical techniques can now be implemented directly on the drilling site, such as x-ray diffraction (XRD), x-ray fluorescence (XRF), microscopy and even nuclear magnetic resonance (NMR).

Although considerable information can be collected on a cutting, once it is extracted, a key issue remains in the determination of the depth at which the analyzed cutting was extracted.

In particular, if a lack of accuracy exists in the determination of the depth related to a particular cutting, the information obtained from the above-mentioned analytical techniques cannot be used as efficiently as it could.

In order to determine the position at which a cutting recovered at the surface was drilled, it is known to monitor precisely the flow rates of the pumps injecting mud in the well, as well as the flow rate of recovered mud emerging from the well.

A mathematical model can then be used to compute the transportation behavior of the cutting between the point at which it was drilled in the well, to the surface. Examples of models for cuttings transport are disclosed in SPE 28306, in SPE 77261, or in SPE 64646.

In these models, a drag coefficient of the cutting is a key parameter in determining the cutting behavior in the mud. This drag coefficient is empirically or semi empirically determined which may lead to large errors in the determination of the depth associated to each cutting.

In particular, the largest pieces of cuttings are very valuable for determining the chemical or physical information which is relevant to the cuttings analysis, for example porosity, chemical content, etc.

However, the large pieces of cuttings have often very odd shapes and are hence very sensitive to the flow condition within the drilling mud flowing out of the well. This is particularly the case when the mud flow regime is turbulent to optimize advection and to provide a better cleaning of the annular space.

One aim of the invention is to obtain a method for analyzing at least a cutting emerging from a well being drilled, which allows an accurate determination of the cutting position in the well, and which can nevertheless be implemented easily on site, in the vicinity of the well.

One particular aim of the invention is to easily and quickly obtain an accurate determination of a cutting drag coefficient, in order to increase the accuracy of a model estimating the cutting flow behavior from the time it was drilled to the time it was recovered at the surface.

To this aim, the invention concerns a method of the above type, comprising the following steps:

- disposing at least a cutting on a cuttings support surface;
- placing a measuring apparatus over the support surface, the measuring apparatus facing the cutting, at a distance from the cutting;
- measuring a first distance between a reference plane and the support surface in the vicinity of the cutting along an axis transverse to the support surface using the measuring apparatus;
- measuring a second distance between the reference plane and the cutting along the transverse axis, using the measuring apparatus;
- calculating a representative dimension of the cutting based on the difference between the first distance and the second distance.

The method according to the invention comprises one or more of the following feature(s), taken in isolation or according to any possible technical combination(s):

- the measuring apparatus comprises an optical measuring device;
  the measuring of the first distance comprising focusing the optical measuring device on the support surface and measuring a first focusing distance, the first distance being derived from the measured first focusing distance;
the measuring of the second distance comprising a step of focusing on the top of the cutting and measuring a second focusing distance, the second distance being derived from the measured second focusing distance;

- the method comprises a step of capturing an image of the cutting in at least a measurement plane, the method comprising determining at least a second representative dimension of the cutting based on a distance measured from the captured image;
- the method comprises a step of determining the contour of the cutting on the image, the calculating step comprising determining the representative second dimension based on the measured contour;
- the calculation step comprises calculating the moments of the surface S delimited by the contour with a predetermined density distribution, in particular a density distribution such as: $\rho=[1,(x,y\in S) ; 0,(x,y\notin S)]$;
- the support surface has a contrast with at least one cutting to be analyzed;
- the method comprises analyzing a plurality of cuttings emerging from the well, the cuttings being separated from each other on the support surface;
- the method comprises recovering a sample of cuttings from the well, and sieving the sample to remove some of the recovered cuttings from the cuttings to be analyzed;
- the method comprises a step of calculating a drag coefficient of each cutting based on the first representative dimension calculated at the calculating step; and
- the method comprises a step of determining a position of the cutting in the well based on a mathematical model using the first representative dimension of the cutting.

The invention also relates to an assembly for analyzing at least a cutting emerging from a well, the assembly comprising:

- a support surface receiving at least a cutting;
- a measuring apparatus placed above the support surface to face the cutting, the measuring apparatus being apart from the cutting, the measuring apparatus comprising measuring means for measuring a first distance between a reference plane and the support surface along an axis transverse to the support surface and for measuring a second distance between the cutting and the reference plane along the transverse axis; and
- a unit for calculating a first representative dimension of the cutting based on the difference between the first distance measured by the measuring means and the second distance measured by the measuring means.

The assembly according to the invention may also comprise the following features:

- the measuring apparatus comprises an optical measuring device a having adjustable focusing means able to focus in a first focal configuration on the support surface and in a second focal configuration on the top of a cutting, the measuring means comprising means for estimating the position of the focusing plane in the first focal configuration and the position of the focusing plane in the second focal configuration.

The invention will be better understood upon reading of the following description, taken purely as an example, and made in reference to the appended drawings in which:

- Figure 1 is a schematic view, taken in vertical section, of a drilling installation provided with a first cutting analysis assembly according to the invention;
- Figure 2 is a schematic side view of the first cuttings analysis assembly according to the invention;
- Figure 3 is a view taken from above of the supporting surface of a first cuttings analysis assembly according to the invention, the supporting surface being loaded with cuttings;
- Figure 4 is a schematic view of a picture taken of the contour of a first cutting analyzed by the first cutting analysis assembly according to the invention;
- Figure 5 is a view similar to Figure 4 in which the focus has been made on the supporting surface;
- Figure 6 is a view similar to Figure 5, in which the focus has been made on the top of the cutting;
- Figure 7 is a synoptic diagram of the main steps of a first cuttings analysis method according to the invention;
- Figure 8 is a synoptic diagram of the sample preparation step of the method shown in Figure 7;
- Figure 9 is a synoptic diagram of the sample measurement step of the method illustrated in Figure 7; and
- Figure 10 is a synoptic diagram of the calculation step of the method illustrated in Figure 7.

In everything which follows, the terms "upstream" and "downstream" are understood with respect to the normal direction of circulation of a fluid in a pipe.

A cuttings analysis assembly according to the invention is used for example in a drilling installation 11 for a fluid production well, such as a hydrocarbon production well.

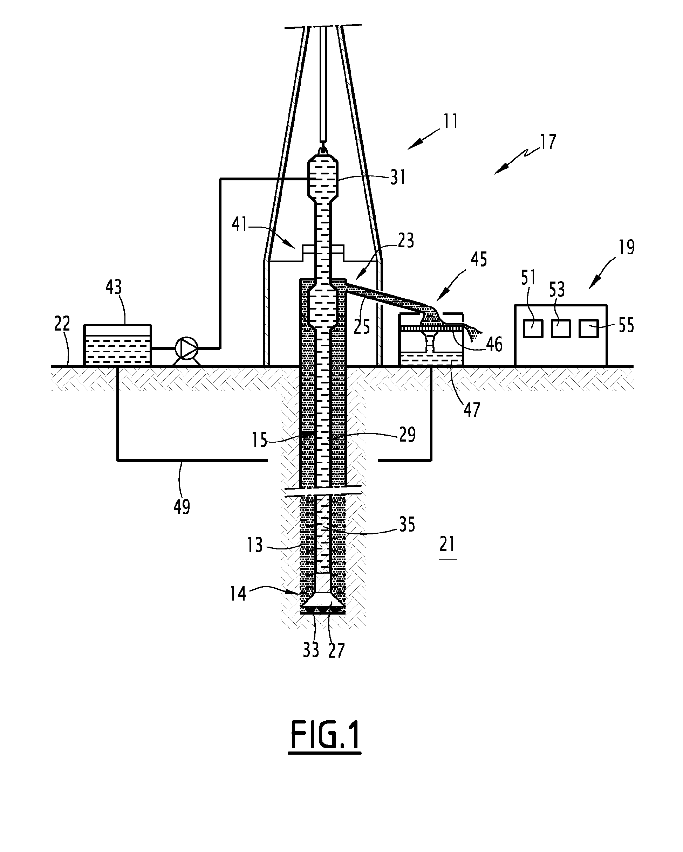

As illustrated in Figure 1, the installation 11 comprises a rotary drilling tool 15 drilling a cavity 14 in the ground, a surface installation 17, where drilling pipes are placed in the cavity 14 and a first cuttings analysis assembly 19 according to the invention.

A well 13 delimiting the cavity 14 is formed in the substratum 21 by the rotary drilling tool 15. At the surface 22, a well head 23 having a discharge pipe 25 closes the well 13.

The drilling tool 15 comprises a drilling head 27, a drill string 29 and a liquid injection head 31.

The drilling head 27 comprises means 33 for drilling through the rocks and/or sediments of the substratum 21, the drilling operation producing solid drilling residues or "cuttings". The drilling head 27 is mounted on the lower portion of the drill string 29 and is positioned in the bottom of the drilling pipe 13.

The drill string 29 comprises a set of hollow drilling pipes. These pipes delimit an internal space 35 which makes it possible to bring a drilling fluid from the surface 22 to the drilling head 27. To this end, the liquid injection head 31 is screwed onto the upper portion of the drill string 29.

The drilling fluid is in particular a drilling mud, in particular a water-based or oilbased drilling mud.

The surface installation 17 comprises means 41 for supporting the drilling tool 15 and driving it in rotation, means 43 for injecting the drilling liquid and a shale shaker 45, for receiving and treating the effluent emerging from the well.

The injection means 43 are hydraulically connected to the injection head 31 in order to introduce and circulate the drilling fluid in the inner space 35 of the drill string 29.

The shale shaker 45 collects the drilling fluid charged with cuttings which emerges from the discharge pipe 25. The shale shaker 45 is equipped with sieves 46 to allow the separation of the solid drilling residues or cuttings, from the drilling mud.

The shale shaker 45 also comprises a tank 47 located under the sieves 46 to recover the drilling mud deprived of cuttings.

The surface installation 17 further comprises a recirculation duct 49 connecting the recovery tank 47 to the injection means 43 to re-circulate the mud collected in the tank 47 to the injection means 43.

The cuttings analysis assembly 19 is intended to prepare, to measure and to analyse the cuttings contained in the mud emerging from the discharge pipe 25.

The cuttings are in particular collected at the sieves 46 of the shale shaker 45. These cuttings are made of small pieces of rocks and/or sediments which are generated of the cavity 14.

The average maximal dimension of the cuttings in particular ranges from 0.25 mm to 3 mm, and is generally lower than 2 mm. The cuttings which are analyzed in the analysis assembly 19 generally have a dimension higher than 1 mm.

As will be seen below, the shape of the cuttings can be regular, i.e. of substantially circular or elongated shape, such as ovoid or ellipsoid. Alternatively, the shape of the cuttings can be very irregular.

As shown in Figure 1, the cuttings analysis assembly 19 comprises a sample preparation unit 51, a sample measuring unit 53 and a calculation unit 55 for determining at least one specific dimension of a cutting and for calculating the depth at which the cutting was drilled.

The sample preparation unit 51 comprises a cleaning and drying stage, for cleaning and drying the cuttings recovered from the shale shaker 45 and advantageously, a sieving stage for preparing at least two different classes of cuttings by filtering the cuttings according to their maximal dimension on a sieve.

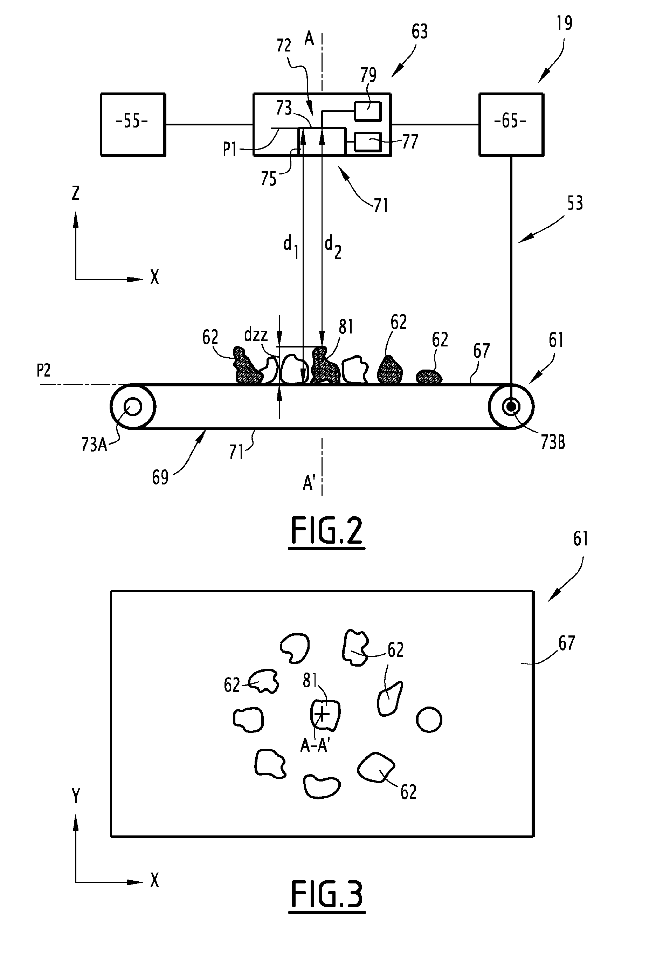

As illustrated in Figure 2, the sample measurement unit 53 comprises a support 61 for receiving the cuttings 62 to be analysed, a cutting measurement device 63 located above and apart from the cuttings 62 laid on the support 61 and a positioning apparatus 65 for relatively positioning the measurement apparatus 63 and the support 61.

The support 61 has a cuttings support surface 67 which carries the cuttings 62.

Advantageously, the support surface 67 is planar, at least in the area facing the measurement apparatus 63.

In the example of Figure 2, the measurement surface 67 is located in an horizontal plane (X, Y) shown in Figure 3.

The support surface 67 can be located at the top of a mobile belt conveyor 69. In a particular example, the conveyor 69 comprises a belt 71 rolled around two rollers 73A, 73B to allow a movement of the cuttings on the surface 67 relative to the measurement apparatus 63.

In a variation, the support 61 consists of a fixed support surface 67.

The support surface 67 has an appearance which provides contrast with the cuttings 62 laid on the surface 67, in order to make the cuttings 62 distinguishable from the surface 67, when detected by the measurement apparatus 63.

When the measurement apparatus 63 is an optical measurement apparatus, the visual contrast is optimized at the upper surface of the cuttings 62 in reference with the surface 67 . The thickness of the cutting is obtained by adjusting the maximum constrat varying along z the focal plan of the optical device. As indicated above, the optical measurement apparatus 63 is located above and apart from the cuttings support surface 67 and from each cutting 62.

In the embodiment of Figure 2, the measurement apparatus 63 is an optical measurement device. In particular, the measurement apparatus 63 comprises a microscope 71 and a camera 72.

The optical measurement device 63 has a detector 73, an optics 75 able to focus light arising from the outside of the measurement apparatus 63 on the detector 73, means 77 for adjusting the optics 75 and modifying the focusing distance of the optics 75 and means 78 for detecting the focusing distance separating the detector 63 and the scene on which the optics 75 focuses.

The detector 73 is for example a digital camera having an electronic image sensor able to take still images of the scene on which the optics 75 is focused.

The electronic image sensor is typically a Charge - Coupled Device (CCD) or an Active - Pixel Sensor (APS) such as produced by a CMOS process.

The images taken by the detector 73 are based on a collection of light received in the visible wavelengths, i.e. from approximately 400 mm to approximately 800 mm. The wavelengths of the light collected by the optics 75 are focused on the detector 73 to form an image reproducing what a human eye would see.

The optics 75 comprises at least one lens. The optics 75 is able to focus on a scene located apart from the detector 63, in particular on the surface 67 or in the vicinity of the surface 67 and to form an image of the scene on the detector 73.

Advantageously, the optics 75 is further able to magnify the size of the scene to create an image in which the elements of the scene, in particular the cuttings 62 are magnified by a magnification ranging from one time the axial dimension of the scene to 200 times the axial dimension of the scene.

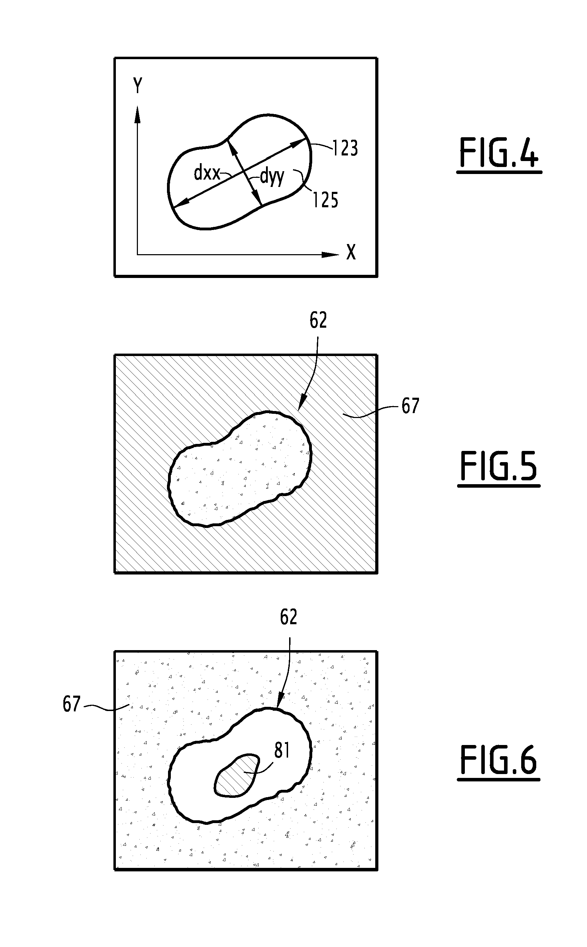

The optics 75 is adjustable by means of the adjustment means 77 so that it can focus on a focusing plane P2 which is movable along an axis A-A' perpendicular to the measuring apparatus 63, relative to a reference plane P1 located on the detector 73. The focusing plane P2 is adjustable at least from the top 81 of each cutting 62, as shown in Figure 6, to the support surface 67, as shown in Figure 5.

A clear image of the scene located at the focusing plane P2 is formed on the detector 73 at the reference plane P1. By contrast, the elements located apart from the focusing plane P2, either above or behind the focusing plane appear blurred on the image.

The detection means 79 are able to record the position of the focusing plane P2 with regard to the reference plane P1 when the optics adjustment means 77 move the focusing plane P2 of the optics 75 along axis A-A'.

The positioning device 65 is able to move the measurement apparatus 63 and the cuttings support surface 67 relative to one another at least in the plane (X, Y).

As a consequence, the positioning device 65 is able to place the optics 75 directly in register with each cutting 62 to be analysed. The positioning device 65 is also able to place the optics 75 directly in register with an area of the surface 67 which is free of cuttings 62, and which is located around each cutting 62 between a cutting 62 and each adjacent cutting 62.

The calculation unit 55 comprises means for calculating at least a first representative dimension $d_{xx}$, $d_{yy}$, $d_{zz}$ of each cutting 62 based on the measurement made by the measurement apparatus 63, and in particular three representative dimensions of the cutting 62.

The calculation unit 55 also comprises means for determining the position at which the cutting 62 was drilled in the well 13, based on at least the first representative dimension $d_{xx}$, $d_{yy}$, $d_{zz}$ of the cutting 62 and based on a mathematical model.

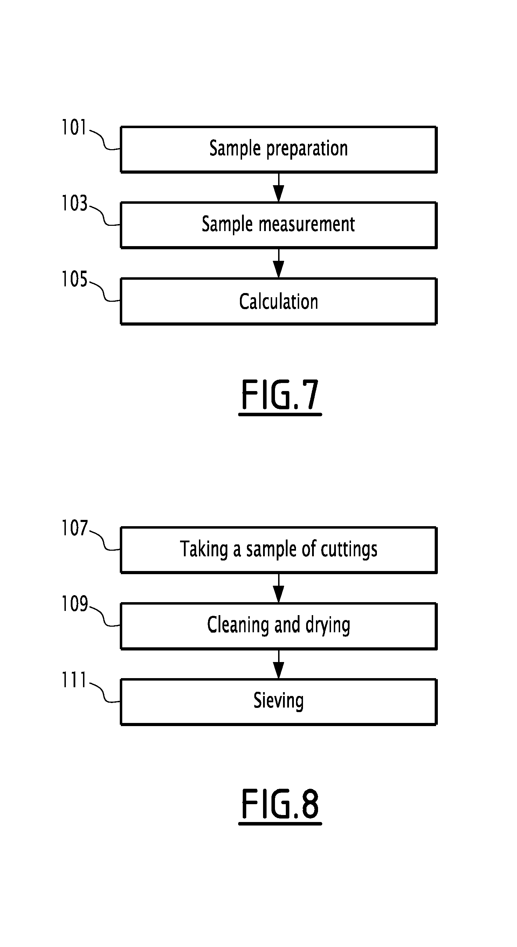

The cuttings analysis method according to the invention, carried out during the operations of drilling a well, will be now described as an example, with reference to Figures 1 and 7.

In reference to Figure 1, during the drilling operations, the drilling tool 15 is driven in rotation by the surface installation 41. The drilling head drills the rocks and sediments at the bottom of cavity 14 to produce cuttings.

During this operation, a drilling fluid, advantageously a liquid, is continuously introduced into the inner space 35 of the drill string 29 by the injection means 43.

The fluid moves downwards as far as the drilling head 27, and passes into the borehole through the drilling head 27.

The liquid cools and lubricates the drill string 29, and is especially used to evacuate from bottom to surface the cuttings generated during the drilling process. Indeed, the liquid collects the solid cuttings resulting from the drilling operation and moves back upwards through the annular space defined between the drill string 29 and the borehole 13. The liquid charged with solids, in particular cuttings, is subsequently evacuated through the discharge pipe 25.

The liquid charged with solids is then evacuated on the shale shaker 45 to separate the solids from the liquid which carries the solids. The cuttings above a certain side, i.e. higher than 0.75 mm, are retained on the sieves 46 of the shale shaker 45 and the liquid flows down through the sieves 46 to the tank 47.

At regular time intervals, e.g. at a period ranging from 15 minutes to 60 minutes, or at regular depth intervals, e.g. ranging from one foot to 15 feet, a sample of cuttings 62 is collected on the shale shaker 45 (sub-step 107 in Figure 8).

The sample is taken to the sample preparation unit 51.

As illustrated in Figure 7, the method according to the invention comprises a first step 101 of preparing the sample, a second step 103 of measuring the sample and a third step 105 of calculation.

At sub-step 109, the cuttings 62 available in the sample are cleaned with a cleaning liquid, such as water. Then, at sub-step 111, the cuttings 62 are separated according to their sizes to form at least two classes of cuttings 62 according to their sizes. Advantageously a series of classes will be established to establish a range of cutting origin in the well.

In a particular example, either cuttings having a very small size, e.g. lower than 0.1 mm are discarded or they are counted in the class of cutting of smaller size (supposed to perfectly follow the main mud flow velocity given by the knowledge of the mud flowrate and the annular section of the space between the drilling pipes and the borehole. The targeted number of class of cutting depends on the desired refinement of the determination of the cutting origin. At least two classes of cuttings 62 are separated in the sieves of the separation stage to be subsequently and separately carried to the sample measurement unit 53, if only two classes are used then the cuttings will be later separated in two origin of location.

The measuring step is then carried out for each class of cuttings separated at sub step 111.

At sub-step 113, the cuttings 62 are first placed on the support surface 67. As shown in Figure 3, the cuttings 62 are preferably spaced apart from each other in the plane (X, Y) so that their contours, taken in projection in the plane X, Y, are spread apart. The cuttings contours preferably do not contact or intersect.

At sub-step 115, the optics means 77 are activated to focus on the support surface 67.

The detection means 79 then records the distance d1 separating the reference plane P1 defined on the detector 73 from the focusing plane P2 on the support surface 67, taken in the immediate vicinity of a cutting 62 to be measured, along axis A-A'.

The measurement apparatus 63 is then activated. A picture of the cuttings 62 laying on the surface 67 is taken at sub-step 117.

Then, at step 119, the optics tuning means 77 are activated to focus on the top 81 of each cutting 62 to be analysed. To this aim, the measurement apparatus 63 is placed in register with the cutting 62, with the detector 73 facing the cutting 62.

When focus is made on the top 81 of the cutting 62, as shown in Figure 6, the distance d2 between the reference plane P1 on the detector 73 and the focusing plane P2 located at the top of the cutting 81 is measured by the detector 79.

Sub-steps 115 to 119 are repeated for each cutting 62 to be measured.

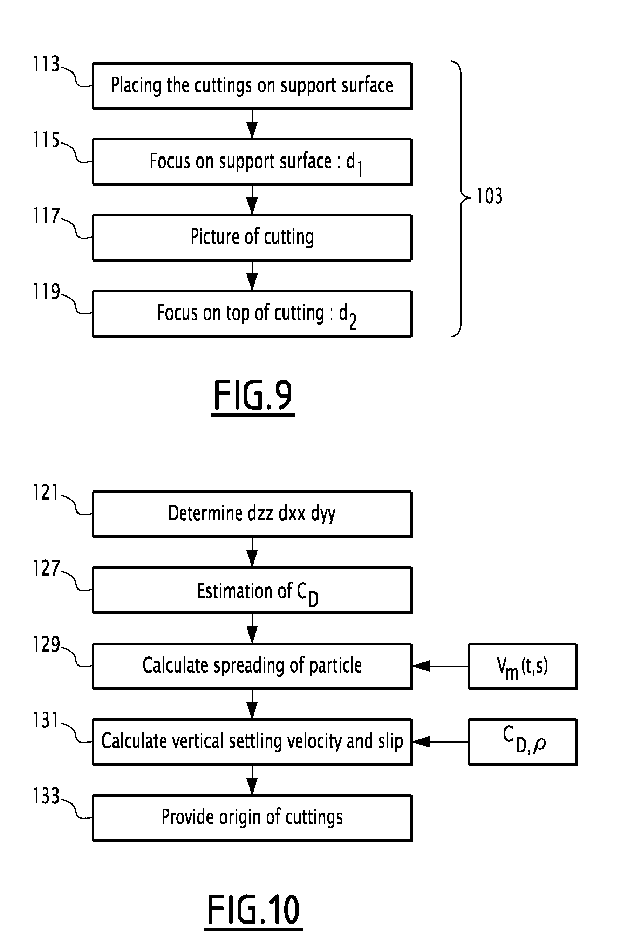

The calculation step 105 is illustrated in Figure 10.

At sub-step 121, three representative dimensions $d_{xx}$, $d_{yy}$, $d_{zz}$ of each cutting 62 are determined based on the measurements carried out in step 103.

According to the invention, a first representative dimension $d_{zz}$ of the cutting is determined by calculating, for each cutting 62, the difference between the first measured distance d1 and the second measured distance d2. This difference is representative of the height $d_{zz}$ of the cutting, taken along axis A-A', when the cutting 62 is placed on the support surface 67.

Additionally, for each cutting 62, two other representative distances $d_{xx}$, dyy are inferred from the image taken at step 117 and shown in Figure 4.

To this aim, a shape recognition software is used to determine the contour 123 of the cutting 62, taken in projection in the plane which the image was taken.

The second representative dimensions $d_{xx}$ and the third representative dimension $d_{yy}$ are estimated based on the determined contour 123.

In a particular embodiment, the dimensions $d_{xx}$ and dyy are determined by using a mathematical calculation such as the method of moments.

The calculation unit 55 hence calculate the inner surface 125 delimited by the contour 123 by applying a density distribution as defined in the following equation:

$$\rho = \left[1, (x, y \in S) ; 0, (x, y \notin S)\right] \qquad (1)$$

The moments are then calculated according to the following equations:

$$I_{xx} = \iint_S \rho(x - x_G)^2 \, dxdy \qquad (2)$$

$$I_{yy} = \iint_S \rho(y - y_G)^2 \, dxdy \qquad (3)$$

$$I_{xy} = \iint_S \rho(y - y_G)dxdy \qquad (4),$$

where $x_G$ and $y_G$ are the coordinates of the gravity center of the surface distribution, to obtain an inertial matrix of the shape defined by the following equation:

$$I = \begin{bmatrix} I_{xx} & I_{xy} \\ I_{xy} & I_{yy} \end{bmatrix} \qquad (5)$$

The matrix is diagonalized to obtain Eigen values $\lambda_1$ and $\lambda_2$ which are proportional to $d_{xx}$ and dyy according to the following equation:

$$d_{YY} = 2\sqrt{\lambda_1}, d_{ZZ} = 2\sqrt{\lambda_2} \qquad (6)$$

The orientation of the plane relative to a predefined system of coordinates X, Y is also given by the following equation:

$$\theta = \frac{1}{2}\tan^{-1}\left(\frac{2I_{xy}}{I_{yy} - I_{xx}}\right) \qquad (7)$$

Then, at sub-step 127, an estimate of a quantity representative of the drag of the cutting 62 in the drilling mud is calculated for each cutting 62.
In particular, a drag coefficient $C_D{}^*$ can be calculated based on the representative dimensions.
In a particular example, the core shape function is used to calculate the drag coefficient $C_D{}^*$.
To this end, the following quantity A* is calculated by the following equation:

$$A^* = \frac{d_{xx}\, d_{zz}}{d_{yy^2}} \qquad (8)$$

Based on quantity A*, a shape factor for the cutting 62 can be calculated and a correction factor $C_{corr}$ for the particles can also be calculated according to the following equations:

$$f_{shape} = (A^*)^{0.09} \qquad (9)$$

$$C_{shape} = \sqrt{6A^*} - 1 \qquad (10)$$

Then, in this particular example, a modified drag coefficient $C_D{}^*$ and a modified Reynolds number ($R_e{}^*$) are calculated based on the following equations:

$$C_D^* = \frac{C_D}{C_{shape}} \qquad (11)$$

$$R_{ep}^* = \frac{C_{shape}}{f_{shape}} R_{ep} \qquad (12)$$

The particle Reynolds number $R_{ep}$ is calculated based on the following equation:

$$R_{ep} = \frac{\rho_f |U_{pz} - U_{fz}|}{\mu_f} \qquad (13)$$

in which $U_{pz}$ is the particle velocity in vertical motion, $U_{fz}$ is the mud velocity, $\mu_F$ is the mud dynamic viscosity and $\rho_f$ is the mud density.

For the calculation of $C_D^*$, a test is advantageously performed to determine if the cutting 12 is a spherical particle or a non spherical particle. To this end, a test such as developed in the article "Method Geology. Mech. Appl. Mat. 9, 1956, pages 313 to 319" is used to test whether the particle is spherical or pseudo spherical or if the particle is non spherical.

If the particle is spherical, a first empirical formula is used to determine a drag coefficient and if the particle is non spherical a second empirical formula is used to determine the drag coefficient.

The first and second empirical formula are based for example on the following equations in which a to h are empirical constants:

$$C_D^* = \frac{a}{R_{ep}^*}\left[1 + b(R_{ep}^*)c\right] + \frac{d}{1 + \dfrac{e}{(R_{ep}^*)^f}} \qquad (14),$$

for spherical or pseudo spherical particles;

$$C_D^* = \frac{a}{R_{ep}^*}\left[1 + b(R_{ep}^*)c\right] + \frac{d}{1 + \dfrac{g}{(R_{ep}^*)^h}} \qquad (15),$$

for non spherical particles

At sub-step 129, a mathematical model is used to determine the axial position at which the cutting 62 was drilled.

To this aim, the history $V_M$ (t, s) of the velocity of each particle as a function of time and as a function of the trajectory s of the well is estimated by mud flow rate analysis, i.e by the measurements of the flow rate of mud injected by the injection means and by the flow rate of mud emerging from the well.

Based on this data, the spreading of the cuttings along time due to the integral of the slip velocity along the time of advection within the mud is determined at sub-step 129.

As an example of mathematical resolution, the following equation can be solved at each instant of the mud trajectory by an iterative resolution scheme, assuming steady state mudflow and a small slip velocity:

$$\frac{\frac{\pi}{8} \cdot d^2 \cdot \rho_f \cdot}{\left(\rho_p + \frac{\rho_f}{2}\right) \cdot V_p} \cdot \left|U_p - U_f\right| \cdot \left(U_p - U_f\right) \cdot C_D^* - \frac{d(U_p - U_f)}{dt} \quad (16)$$

in which $\rho_p$ is the particle density, Vp is the cuttings volume and $\frac{\pi}{4} \cdot d^2$ is the front section of the particle perpendicular to the flow direction,

Then, the deviation of each particle can be calculated by the difference :

$$\Delta L = \int_{t0}^{tup} (U_p - U_f) \cdot dt \, , (17)$$

in which t0 is the time at which the cutting has been created and $t_{up}$ is the time necessary to reach the surface. $t_{up}$ is given by the following equation:

$$t_{up} = L_d x S_a x Q_{mud} \quad (18)$$

in which $L_d$ is the length of drilling, $S_a$ is the annular section of the well, and $Q_{mud}$ is the mud flow rate.

Then, at sub-step 131, based on the density of the cuttings 62, the vertical settling velocity is calculated, using the drag coefficient $C_D^*$ to complete the knowledge of the slippage. This calculation is made based on an iterative resolution method.

The limit settling velocity $|U_{pz}—U_{fz}|$ can be calculated by an iterative resolution method using e.g. the following equation, in which the difference of density between the cuttings contained in the mud and the mud is input.

$$\left|U_{pz} - U_{fz}\right| \cdot \left(U_{pz} - U_{fz}\right) \cdot C_D^* \left(U_{pz} - U_{fz}\right) = \frac{(\rho_p - \rho_f) \cdot g \cdot V_p}{\frac{\pi}{8} \cdot d^2 \cdot \rho_f} \quad (19)$$

in which $\rho_p$ is the particle density, Vp is the cuttings volume and $\frac{\pi}{4} \cdot d^2$ is the front section of the particle perpendicular to the flow direction.

The iterative resolution method for example comprises a initial step in which an initial limit settling velocity $|U_{pz}—U_{fz}|_0$ is estimated, followed by steps of calculating the slip Reynolds number according to equation (13), calculating the modified drag coefficient according to equations (14) and (15) and deriving an updated limit settling velocity based on equation (19) until a convergence on the limit steeling viscosity is reached.

The slippage due to the limit of ascending velocity is then integrated along time to determine the exact origin of the cutting 62.

$$\Delta Lz = \int_{t0}^{tup} (U_{pz} - U_{fz}) \cdot dt \, , (20)$$

At sub-step 133, the calculation sub-steps 121 to 131 are repeated for each sieved sample and the cuttings origin and histograms are given.

The method according to the invention therefore allows a very accurate determination of specific dimensions of the cuttings 62 recovered from a well. The method can be used in the vicinity of a well being drilled.

The characterization of the cuttings 62 is more complete, since it allows in particular the determination of three

specific dimensions $d_{xx}$, dyy, $d_{zz}$ of each cutting 62 in order to improve the models which simulate the behaviour of the cuttings 62 in the drilling mud, from the point at which they are drilled to the sampling point.

In particular, the drag coefficient $C_D$ of each cutting can be estimated very accurately by simple means which can be implemented in a drilling installation.

In a variation, the first distance $d_1$ and the second distance $d_2$ can be determined by other means which do not enter in contact with the cuttings 62, such as other optical method or ultrasonic methods. In the case of acoustic determination of the cutting thinness by acoustic the method consist to analyse the time of reflected wave on the cutting surface.

**Claims**

1. Method for analyzing at least a cutting (62) emerging from a well (13), the method comprising the following steps:

   - disposing at least a cutting (62) on a cuttings support surface (67);
   - placing a measuring apparatus (63) over the support surface (67), the measuring apparatus (63) facing the cutting (62), at a distance from the cutting (62);
   - measuring a first distance ($d_1$) between a reference plane and the support surface (67) in the vicinity of the cutting (62) along an axis (A-A') transverse to the support surface (67) using the measuring apparatus (63);
   - measuring a second distance ($d_2$) between the reference plane and the cutting (62) along the transverse axis (A-A'), using the measuring apparatus (63);
   - calculating a representative dimension ($d_{zz}$) of the cutting (62) based on the difference between the first distance ($d_1$) and the second distance ($d_2$).

2. Method according to claim 1, **characterized in that** the measuring apparatus (63) comprises an optical measuring device (71);
   the measuring of the first distance ($d_1$) comprising focusing the optical measuring device (71) on the support surface (63) and measuring a first focusing distance, the first distance ($d_1$) being derived from the measured first focusing distance;
   the measuring of the second distance ($d_2$) comprising a step of focusing on the top (81) of the cutting (62) and measuring a second focusing distance, the second distance ($d_2$) being derived from the measured second focusing distance.

3. Method according to claim 2, **characterized in that** it comprises a step of capturing an image of the cutting (62) in at least a measurement plane, the method comprising determining at least a second representative dimension ($d_{yy}$; $d_{zz}$) of the cutting (62) based on a distance measured from the captured image.

4. Method according to claim 3, **characterized in that** it comprises a step of determining the contour (123) of the cutting (62) on the image, the calculating step comprising determining the representative second dimension (dyy; $d_{zz}$) based on the measured contour (123).

5. Method according to claim 4, **characterized in that** the calculation step comprises calculating the moments of the surface S delimited by the contour (123) with a predetermined density distribution, in particular a density distribution such as: $\rho = [1, (x, y \in S) ; 0, (x, y \notin S)]$.

6. Method according to any one of the preceding claims, **characterized in that** the support surface (67) has a contrast with at least one cutting (62) to be analyzed.

7. Method according to any one of the preceding claims, **characterized in that** it comprises analyzing a plurality of cuttings (62) emerging from the well, the cuttings (62) being separated from each other on the support surface (67).

8. Method according to anyone of the preceding claims, **characterized in that** it comprises recovering a sample of cuttings (62) from the well (13), and sieving the sample to remove some of the recovered cuttings (62) from the cuttings to be analyzed.

9. Method according to anyone of the preceding claims, **characterized in that** it comprises a step of calculating a drag coefficient ($C_D$) of each cutting (62) based on the first representative dimension ($d_{zz}$) calculated at the calculating step.

10. Method according to anyone of the preceding claims, **characterized in that** it comprises a step of determining a position of the cutting (62) in the well (13) based on a mathematical model using the first representative dimension ($d_{zz}$) of the cutting (62).

11. Assembly (19) for analyzing at least a cutting (62) emerging from a well, the assembly comprising :

- a support surface (67) receiving at least a cutting (62);
- a measuring apparatus (63) placed above the support surface to face the cutting (62), the measuring apparatus (63) being apart from the cutting (62), the measuring apparatus (63) comprising measuring means (79) for measuring a first distance ($d_1$) between a reference plane and the support surface (67) along an axis (A-A') transverse to the support surface (67) and for measuring a second distance ($d_2$) between the cutting (62) and the reference plane along the transverse axis (A-A') ; and
- a unit (55) for calculating a first representative dimension ($d_{zz}$) of the cutting (62) based on the difference between the first distance ($d_1$) measured by the measuring means (79) and the second distance ($d_2$) measured by the measuring means (79).

12. Assembly according to claim 11, **characterized in that** the measuring apparatus (63) comprises an optical measuring device (71) a having adjustable focusing means (75) able to focus in a first focal configuration on the support surface (67) and in a second focal configuration on the top of a cutting (62), the measuring means comprising means (79) for estimating the position of the focusing plane in the first focal configuration and the position of the focusing plane in the second focal configuration.

## FIG.1

**FIG.2**

**FIG.3**

FIG.4

FIG.5

FIG.6

101 — | Sample preparation |

103 — | Sample measurement |

105 — | Calculation |

## FIG.7

107 — | Taking a sample of cuttings |

109 — | Cleaning and drying |

111 — | Sieving |

## FIG.8

113 — Placing the cuttings on support surface

115 — Focus on support surface : $d_1$

117 — Picture of cutting

119 — Focus on top of cutting : $d_2$

103

## FIG.9

121 — Determine dzz dxx dyy

127 — Estimation of $C_D$

129 — Calculate spreading of particle ← $V_m(t,s)$

131 — Calculate vertical settling velocity and slip ← $C_{D,\rho}$

133 — Provide origin of cuttings

## FIG.10

EP 2 469 222 A1

**EUROPEAN SEARCH REPORT**

Application Number

EP 10 30 6505

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 804 523 A (MC CORMACK H) 16 April 1974 (1974-04-16) * column 3, lines 11-27 * * abstract; figures 6,7 * | 1-12 | INV. G01B11/02 G01B11/06 E21B21/06 |
| X | US 2004/179210 A1 (BLAESING-BANGERT CAROLA [DE] ET AL) 16 September 2004 (2004-09-16) * paragraph [0022] * * claim 1; figure 1 * | 1-12 | |
| X | US 5 485 082 A (WISSPEINTNER KARL [DE] ET AL) 16 January 1996 (1996-01-16) * column 6, lines 5-21 * * figure 2 * | 1,6-11 | |
| A | US 6 233 966 B1 (DELPUECH BERNARD [FR] ET AL) 22 May 2001 (2001-05-22) * figures 1-4 * * column 6, line 34 - column 7, line 41 * | 4 | |
| A | WO 2009/105469 A2 (MI LLC [US]; DOMAN AARON A [US]; GARBER JAKE M [US]; HERRERA PHILIP E) 27 August 2009 (2009-08-27) * claims 1,13 * | 1,11 | TECHNICAL FIELDS SEARCHED (IPC) G01B E21B |

The present search report has been drawn up for all claims

| Place of search | Date of completion of the search | Examiner |
|---|---|---|
| Munich | 13 April 2011 | Passier, Martinus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EP 2 469 222 A1

## ANNEX TO THE EUROPEAN SEARCH REPORT
## ON EUROPEAN PATENT APPLICATION NO.

EP 10 30 6505

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2011

| Patent document cited in search report | | Publication date | Patent family member(s) | | Publication date |
|---|---|---|---|---|---|
| US 3804523 | A | 16-04-1974 | NONE | | |
| US 2004179210 | A1 | 16-09-2004 | NONE | | |
| US 5485082 | A | 16-01-1996 | DE | 4011717 A1 | 17-10-1991 |
| | | | WO | 9115733 A1 | 17-10-1991 |
| | | | EP | 0524204 A1 | 27-01-1993 |
| | | | JP | 2903258 B2 | 07-06-1999 |
| | | | JP | 5505029 T | 29-07-1993 |
| US 6233966 | B1 | 22-05-2001 | AU | 736830 B2 | 02-08-2001 |
| | | | AU | 6405198 A | 22-09-1998 |
| | | | CA | 2282686 A1 | 11-09-1998 |
| | | | DE | 69806579 D1 | 22-08-2002 |
| | | | DE | 69806579 T2 | 20-02-2003 |
| | | | EP | 0965021 A1 | 22-12-1999 |
| | | | ES | 2180148 T3 | 01-02-2003 |
| | | | FR | 2760272 A1 | 04-09-1998 |
| | | | WO | 9839606 A1 | 11-09-1998 |
| WO 2009105469 | A2 | 27-08-2009 | AR | 070613 A1 | 21-04-2010 |
| | | | AU | 2009215590 A1 | 27-08-2009 |
| | | | CA | 2715800 A1 | 27-08-2009 |
| | | | CN | 102007268 A | 06-04-2011 |
| | | | EP | 2255068 A2 | 01-12-2010 |
| | | | US | 2010313645 A1 | 16-12-2010 |

EPO FORM P0459

For more details about this annex : see Official Journal of the European Patent Office, No. 12/82

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Method Geology. Mech. Appl. Mat.,* 1956, vol. 9, 313-319